# EUROPEAN PATENT SPECIFICATION

(11) **EP 1 727 419 B1**
(45) Date of publication and mention of the grant of the patent: **05.01.2011**
(21) Application number: 05722214.3
(22) Date of filing: 15.03.2005
(51) Int. Cl.: A01J 5/017, A01K 5/02

(54) **BEHAVIOURAL MILKING**
VERHALTENSMELKEN
TRAITE COMPORTEMENTALE

(30) Priority: 24.03.2004 SE 0400774
(43) Date of publication of application: 06.12.2006
(60) Divisional application: 10174466.2
(73) Proprietor: DeLaval Holding AB, 147 21 Tumba (SE)
(72) Inventor: MELIN, Martin, S-753 23 Uppsala (SE)
(74) Representative: Keijser Bergöö, Malin Katarina
(86) International application number: PCT/SE2005/000368
(87) International publication number: WO 2005/089534

(56) References cited:
- EP-A1- 0 624 313
- EP-A1- 1 008 294
- EP-A2- 0 130 070
- EP-A2- 1 300 074
- DE-C2- 3 702 465
- US-B1- 6 543 381

## Description

### TECHNICAL FIELD

The present invention relates to an automatic milking machine for automatically milking animals and a method therefore. More specifically the present invention relates to an automatic milking machine for automatically milking animals considering eating behaviours for individual animals and a method.

### BACKGROUND OF THE INVENTION

In modern barns employing automatic milking machines, where animals is automatically milked using a robot, the animals are left much at there own, as opposed to traditional milk farming where the milking animals usually were gathered two times a day for milking. In such modern barns, milking animals are allowed, at least to some extent, to decide when they should be milked, so called voluntary milking. Oftentimes, these systems also include some kind of means to guarantee that all animals are milked regularly, for instance moving gates, forcing animals, which has not been milked for some time to the automatic milking machine.

Commonly, the means to make the milking animals voluntarily go to the automatic milking machine is food. Concentrate is r offered at the milking machine, and since this is preferred food for most animals, they tend to go to the milking machine to get concentrate food. However, it is equally important not to milk animals every time they appear at the milking machine, since this would result in non optimal use of the milking machine and the animals. Therefore, a milking allowance parameter is used, and whenever the milking allowance is set to true for a specific animal, that animal will be milked when it appear at the milking machine. This milk allowance parameter is usually the time since last milking, for instance if the time since last milking is more than 320 minutes, then the animal is allowed to be milked. Other milking allowance parameters are also used, such as expected milk yield, success of previous milking, number of other animals milked since last time etc., or a combination of these parameters.

A further complication is that the milking animals need to have access to food as well as concentrates also between milking occasions. Therefore, feeding stations are often located in the barn and the access to these feeding stations is controlled using gates. The milking machine then controls the gates so that a milking animal, having milking allowance, is not allowed access to the feeding stations. The milking animals, then learns that feed is available at the milking machine and will go to the milking machine when she is not allowed access to the feeding station through the gates.

This, however, disturbs the eating pattern of the animal, since the animal will first go to the gate, when she is hungry. There she will be denied access to food. She will then take some time before going to the milking machine, where she possibly ends up in a waiting line. This extra time builds hunger, so when she finally ends up in the feeding station, she will spend more time there, eating more. This will tend to mean that she will eat larger meals not so often, which in turn means a less than optimal eating behaviour. It would be better if the automatic milking disturbed the eating behaviour of the animal to the least possible extent, as seen from the well-being of the animal, as well as from a milk economic perspective.

The eating behaviour for cows consists of a number of meals per 24 hour, where each meal is separated in time. Each meal consists of a number of eatings, which is also separated in time. The mean value between each eating could for instance be 2-3 minutes and the mean value between each meal could be for instance 3-4 hours. A new meal is defined to start when the time from the last eating was greater than a meal criteria time. The meal criteria could for instance be around 40-70 minutes.

It would thus be beneficial if a way of automatically milking animals, which disturbs their eating behaviour to the least possible extent, could be conceived.

It should be noted here that drinking behaviour essentially follows the same pattern as the eating behaviour, if the animal is given access to water in the same controlled manner as for food.

EP 1008294 discloses a method of automatically feeding and milking animals which are allowed to walk about freely in an area destined therefore and to visit individually a milking parlour, in which method an animal visiting the milking parlour is identified and the current value of an individual milking parameter for the animal is determined, on the basis of which value there is decided whether or not the animal will be milked and fed during milking. The milking parameter may be chosen as the number of milkings effected in the milking parlour since the last milking of the relevant animal, the period of time elapsed since the last milking of an animal is chosen as an individual milking parameter for the relevant animal, or the current estimated milk yield.

EP 1300074 discloses a device for automatically supplying, at a feeding parlour, a predetermined amount of at least one sort of feed to an animal in a period having a predetermined length. A computer is suitable for determining the sub-period between the last supply of feed to an animal and the momentary point of time when the animal is identified by an animal identification means at the feeding parlour. The computer controls the device in such a way that, during the momentary visit of the animal to the feeding parlour, there is supplied to the animal a feed balance, the size of said feed balance depending on the determined sub-period.

### SUMMARY OF THE INVENTION

The present inventor has, through research found the surprising fact that feeding and drinking patterns are characteristic for individual cows and consistent over time. The major part (83-96%) of the random variation in the feeding patterns of the cows was due to individual differences between cows. Only a small part (4-17%) of the random variations in the feeding patterns was due to individual differences for a specific cow. That is, it is possible to define individual meal criteria for individual animals which did not change significantly during a lactation.

This surprising discovery thus makes it possible to find the specific meal criteria time for each milking animal in a herd of milking animals and use this as a milking allowance parameter to control when to milk animals, without disturbing their eating behaviour.

It is a main object of the present invention to provide such apparatus and method that at least alleviate the above problems.

It is in this respect a particular object of the invention to provide such apparatus and method that automatically milks animal with minimal disturbance to the animals eating and drinking behaviour.

These objects among others are, according to a first aspect of the present invention, attained by a method for automatically milking animals by means of a milking machine provided to automatically connect teat cups to the teats of a milking animal and automatically milking the animal, wherein the milking machine is controlled by a computer, and the computer is further provided to control if an animal is allowed to be milked. The method comprises the steps of using a meal criteria parameter for each animal to be served by the milking machine, recording a parameter relating to the eating or drinking behaviour of the animal, and allowing or denying an animal to be milked in the milking machine based on at least the recording and the meal criteria parameter.

These objects among others are, according to a second aspect of the present invention, attained by an automatic milking machine for automatically milking animals, comprising a computer provided to control application of teat cups to the teats of an animal and automatically milking the animal. The automatic milking machine comprises eating behaviour recording means provided to record the eating behaviour of the milking animal, and is provided to allow or deny the milking animal to be milked based on the eating behaviour.

By, using a meal criteria in the decision if an animal should be milked or not it is possible to take decisions regarding milking of animals that will disturb the eating behaviour of the animal to the least possible extent.

According to one alternative of the invention the recording of a parameter relating to the eating behaviour is performed by providing a reader in each meal or water station the milking animals has access to, and recording each occurrence of the milking animal in each meal or water station, and recording the parameter relating to the eating or drinking behaviour whenever the time between two occurrences is longer than the meal criteria parameter.

It should be noted that meal or water stations can be separate stations in the barn where food or water is provided, or it can be food and/or water troughs, where food and/or water is provided to the animal. Such troughs may be controlled by the automatic milking machine to dispense food or water depending on if the animal is to be milked, that she has a milking allowance.

By recording each time an animal visit a feeding station it is possible to deduce when she starts a new meal, or when she has finished a meal. By recording these events, and using them to decide when a milking animal should get a milking allowance, the milking occasion can be planned to disturb the eating pattern to the least possible extent.

According to one variant of the invention the milking animal is allowed at least one full meal between each milking.

By allowing a full meal between each milking the milking animal can be taught that she must go to the milking machine every second meal. Thus, she might not first go the gate and be denied feed, but rather go directly to the milking machine. If an animal has an individual milk criteria parameter of 3 hours she will, with this scheme, be milked four times every 24 hours, and always in direct relation to a meal. Thus, she will be milked when she, after a period of no eating, anyway is up and about. Each milk criteria parameter is set and used individually per cow.

According to one variant of the invention the number of full meals between each milking is increased when the milking animal is later in the lactation phase.

When an animal is long gone in lactation, she should be dried. It is then suitable to reduce the number of milking occasions per 24 hours to let the animal dry out and this is, according to this variant, performed, by increasing the number of meals between each milking.

According to one variant of the invention the animal is denied access to feed, if the animal has previously concluded a predetermined number of full meals without being milked, until the animal passes the automatic milking machine.

According to one variant of the invention the computer is provided to control access to the feeding or water stations by controlling gates giving access to the feeding or water stations, or controlling distribution of feed or water in the feeding or water stations.

By denying the animal access to feeding she will go to the milking machine. This is a way to lure the animal to the machine to thereby milk her.

According to one variant of the invention the meal criteria parameter is determined by: - providing a reader in each meal and/or water station and recording each occurrence of the milking animal in each meal and/or water station in order to establish feeding visit intervals, - fitting at least two density functions to the natural logarithm of the feeding visit intervals, and - defining the meal criteria to be larger than the mean value for the density function having the lowest mean value, and to be lower than the mean value of the density function having the highest mean value.

The meal criteria may be determined for each animal during an initial phase when the animal is introduced in the barn. During that period the animals may be given free access to food to determine their natural feeding behaviour.

By fitting two density functions to the feeding visit intervals, the density function having the lowest mean value will represent with-in meal eatings, and the density function with the highest mean value will represent between meal times. Thus, a meal criteria should be set somewhere between these mean values.

According to one variant of the invention the meal criteria is determined for each individual animal in a separate area and fed to said computer for use in said method.

According to one variant of the invention the meal criteria is defined to be the mean value for the density function having the highest mean value, reduced with the standard deviation for the density function having the highest mean value multiplied with a specified factor.

One way to specify a meal criteria parameter can be using the mean value reduced with the standard deviation for the density function having the highest mean.

According to one variant of the invention the meal criteria is defined to be the time for which the first density function and the second density function intersect.

Another way to define the meal criteria is at the intersection of the two density functions.

According to one variant of the invention the density functions are Gauss density functions or Weibull density functions. Alternatively, may one density function be a Gauss function and the other a Weibull function.

According to one variant of the invention said meal criteria parameter is set to the value used in the previous lactation for animals having their second or higher lactation period.

Thereby an initial meal criteria parameter, can be established.

According to one variant of the invention a new meal criteria parameter is determined for each animal regularly during a lactation, and if said new meal criteria parameter differs from said used meal criteria parameter with more than a determined threshold, the new meal criteria parameter is used.

Thereby, the meal criteria may be updated. This is valuable if for instance a rather harsh initial meal criteria was used, or if the meal criteria from the previous lactation was used.

According to one variant of the invention the parameter relating to the eating behaviour is start of a new meal or end of a full meal, wherein end of a full meal is defined as the time of the last recording of feeding, when no more feeding takes place for a time period longer than the meal criteria parameter, and start of a new meal is defined as the time of the first feeding attempt after a time period with no feeding which is longer than the meal criteria parameter.

According to one variant of the invention the automatic milking machine comprises at least two milking robots.

It should be noted that the term automatic milking machine, or just milking machine, in this disclosure is used as a collective term incorporating means to provide the possibility to automatically milk animals according to the invention. Thus it may for instance, for some variants of the invention, include animal identification means, at each feeding station. It may as indicated above also include more than one milking robot, where two milking robots may be located apart from each other. They may then be served by a common computer, or by a network of computers.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Figs. 1 to 5, which are given by way of illustration only, and thus are not limitative of the present invention.
Figure 1 is a schematic top view of a barn according to the present invention.
Figures 2a and 2b are probability density distributions of eating intervals for two different milking animals.
Figure 3 is a schematic flow diagram of an embodiment according to the invention.
Figure 4 is a schematic flow diagram of an embodiment according to the invention.
Figure 5 is a schematic flow diagram of another embodiment according to the invention.

### PREFERRED EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

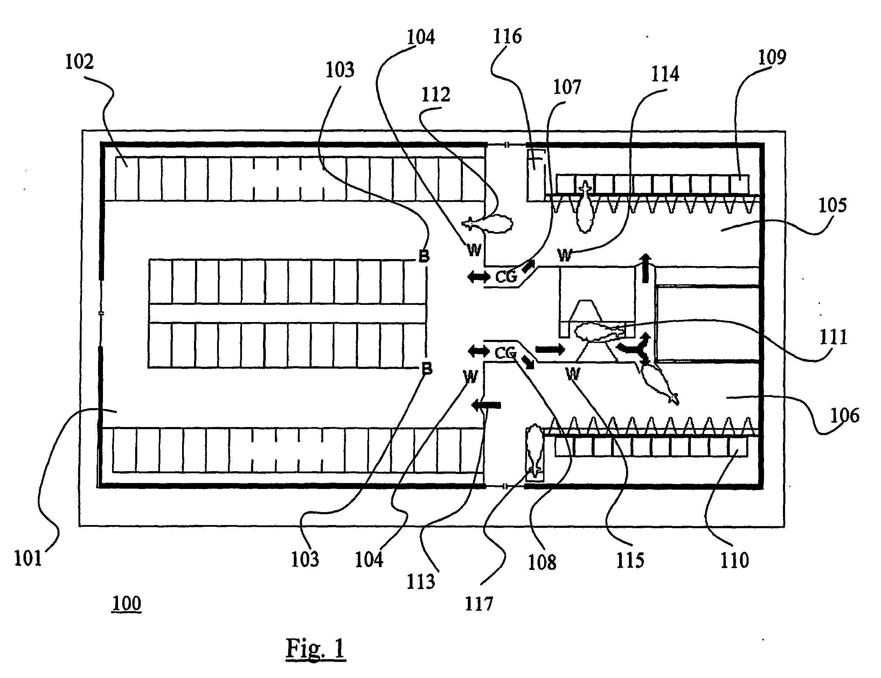

Figure 1 is a barn according to one embodiment of the invention. The barn 100 comprises a resting area 101 having resting bouts. Brushes 103 are provided for the well-being of the animals in the resting area 101. Water troughs 104 are also provided in the resting area 101. The barn 100 further comprises a first and second feeding area 105 and 106, which are accessible through first and second computer controlled gates denoted 107 and 108, respectively. In each feeding area is a number of feeding stations provided, whereof one in each feeding area is denoted 109 and 110, respectively. Further water troughs are also provided in the feeding area and are denoted 114 and 115 An automatic milking machine 111 is provided between the feeding areas and arranged so that, if an animal enters the milking machine from the resting area she might be milked before given access to the feeding areas. One way gates 112 and 113 allows the animals to pass from the feeding areas, 105 and 106 to the resting area 101. Feeding concentrates is available to the animals and are denoted 116 and 117.

The automatic milking machine 111 is provided with a computer (not shown) controlling, amongst other things, the application of teat cups, the teat cleaning and the milking of animal etc. The computer further controls the first and second gate 107 and 108, as well as food distribution at all feeding stations in the feeding area and water distribution at the water troughs 104, 114, 115. Each feeding station, as well as water trough, comprises an animal ID reader, which is connected to the computer so that a registration of each time a specific animal visits a feeding station or water trough is recorded in the computer. These readings are used to determine a meal criteria parameter for each animal.

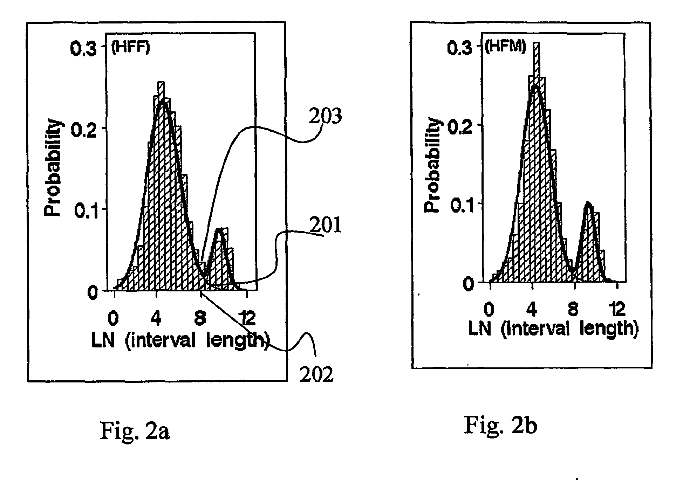

Figures 2a and 2b are plots of the logarithm of the feeding interval for two different animals, where the X-axis represent time between eatings, and the Y-axis represents the probability that the animal should start a new eating after that particular time. As is easily seen the plot is divided into two parts for both animals where the probability increases. Turning to figure 2a, a first Gaussian density function 201 is fitted to the first part and a second Gaussian density function 202 is fitted to the second part, as is seen in the figure. The meal criteria parameter is defined as the intersection 203 between the two density functions.

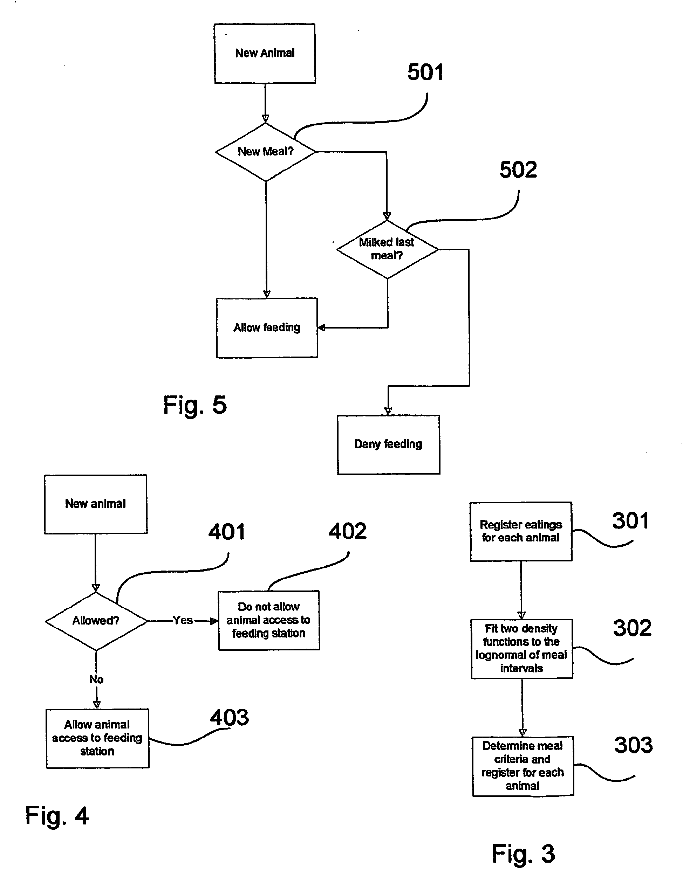

The operation of the automatic milking machine 111 in figure 1 will not be described in connection with figures 3 to 5.

Figure 3 is a schematic flow diagram of an embodiment according to the invention showing how the meal criterion is determined. In step 301 the computer in the automatic milking machine 111 register each visit to a feeding station for each animal, and in step 302 fits two density functions to the logarithm of the visiting intervals to determine the meal criteria according to the above in step 303. In step 303 the meal criteria for each animal is also recorded in the database for later use in deciding if an animal should be milked or not.

Figure 4 is a schematic flow diagram according to one version of the invention. At any time when an animal presents itself to any of the computer controlled gates 107 and 108, the computer controls, in step 401, if the animal has a milking allowance. If the animal has a milking allowance, the gate 107 or 108 remains closed, step 402, and the animal is lured to go to the automatic milking machine 111 and is milked before given access to the feeding area 105, 106. When the animal passes the milking machine 111 she is thus milked. If the animal has no milking allowance the gate 107 or 108 is opened and the animal is let directly into the feeding area.

The milking allowance is set to true if an animal individual time has passed and the animal is not in the middle of an ongoing meal. The animal individual time is set depending on the meal criteria for that particular animal, so that her meal habits are not interfered.

Figure 5 is a schematic flow diagram according to another variant of the invention, where the animals are milked every second meal. It is of course easy to adapt the algorithm if other criteria are to be used, such as that the animal should be milked every meal, ever third meal etc. When an animal present itself before any of the computer controlled gates 107 and 108, the computer in the automatic milking machine 111, checks, in step 501 if the animal is to start a new meal or if she is continuing an ongoing metal. This is done by comparing the time lapsed since her last visit to any feeding station, with her meal criteria parameter. The meal criteria parameter is of course also here set and used individually per cow. If the time lapsed is larger than the meal criteria parameter then this is a new meal. If this is a new meal, a check is performed, step 502, to control if this animal was milked in connection with the start of the previous meal. If this is so, the animal is allowed into the deeding area, but if the animal was not milked in connection with the last meal, she is denied access to the feeding area and is thus lured to visit the automatic milking machine to get milked.

It should be made clear that an animal may go directly to the milking machine. The same tests are performed in this case-That is, if she, in the first case, has a milking allowance, she is milked, or, in the second case, if she had had a meal without milking, she is milked.

It will be obvious that the invention may be varied in a plurality of ways. Such variations are not to be regarded as a departure from the scope of the invention. All such modifications as would be obvious to one skilled in the art are intended to be included within the scope of the appended claims.

## Claims

1. A method for automatically milking animals by means of a milking machine provided to automatically connect teat cups to the teats of a milking animal and automatically milking said animal, wherein the milking machine is controlled by a computer, and said computer is further provided to control if an animal is allowed to be milked, said method is
**characterised by** the steps of:
- using a meal criteria parameter for each animal to be served by said milking machine,
- recording a parameter relating to the eating or drinking behaviour of said animal, and
- allowing or denying an animal to be milked in said milking machine based on at least said recording and said meal criteria parameter.

2. The method according to claim 1, wherein
- said step of recording is performed by providing a reader in each meal or water station said milking animals has access to, and recording each occurrence of said milking animal in each meal or water station, and
- recording said parameter relating to the eating or drinking behaviour whenever the time between two occurrences is longer than said meal criteria parameter.

3. The method according to claim 1, comprising the step of:
- allowing said milking animal at least one full meal between each milking.

4. The method according to claim 1, comprising the step of:
- increasing the number of full meals between each milking when said milking animal is later in the lactation phase.

5. The method according to claim 1, comprising the further step of:
- denying said animal access to feed unt il said animal passes said automatic milking machine, if said animal has previously concluded a predetermined number of full meals without being milked.

6. The method according to claim 1, wherein
- said computer is provided to control access to said feeding or water stations by controlling gates giving access to said feeding or water stations or controlling distribution of feed or water in said feeding or water stations.

7. The method according to claim 1, wherein
- said meal criteria is determined for each individual animal in a separate area and fed to said computer for use in said method.

8. The method according to claim 1 or 7, wherein said meal criteria parameter is determined by the steps:
- providing an animal ID reader in each meal and/or water station and recording each occurrence of said milking animal in each meal and/or water station in order to establish feeding visit intervals.

9. The method according to claim 8, wherein said meal criteria parameter is determined by the further steps of:
- fitting at least two density functions to the natural logarithm of the feeding visit intervals, and
- defining said meal criteria to be larger than the mean value for the density function having the lowest mean value, and to be lower than the mean value of the density function having the highest mean value.

10. The method according to claim 9, wherein
- said meal criteria is defined to be the mean value for the density function having the highest mean value, reduced with the standard deviation for the density function having the highest mean value multiplied with a specified factor.

11. The method according to claim 9, wherein
- said meal criteria is defined to be the time for which the first density function and the second density function intersect.

12. The method, according to any of claims 9-11, wherein
- staid density functions is a Gauss density function or a Weibull density function.

13. The method according to claim 1, wherein
- for animals having their second or higher lactation period, said meal criteria parameter is set to the value used in the previous lactation.

14. The method according to claim 1, wherein
- a new meal criteria parameter is determined for each animal regularly during a lactation, and
- if said new meal criteria parameter differs from said used meal criteria parameter with more than a determine threshold, the new meal criteria parameter is used.

15. The method according to claim 1, wherein
- said milking machine comprises a feeding station, and comprising the further step of:
- denying said milking animal feed, at all feeding stations except the feeding station in said milking machine, if said animal has previously concluded a predetermined number of full meals without being milked.

16. The method according to claim 1, wherein
- said parameter relating to the eating behaviour is start of a new meal or end of a full meal, wherein
- end of a full meal is defined as the time of the last recording of feeding, when no more feeding takes place for a time period longer than said meal criteria parameter, and
- start of a new meal is defined as the time of the first feeding attempt after a time period with no feeding which is longer than said meal criteria parameter.

17. An automatic milking machine for automatically milking animals, comprising a computer provided to control application of teat cups to the teats of an animal and automatically milking said animal, **characterised in that**
- said automatic milking machine comprises eating behaviour recording means provided to record the eating behaviour of said milking animal, and
- said automatic milking machine is provided to allow or deny said milking animal to be milked based on said eating behaviour.

18. The automatic milking machine according to claim 17, wherein
- said automatic milking machine is provided to control access to feed based on said eating behaviour for said milking animal in order to lure said milking animal to said automatic milking machine when said animal is to be milked.

19. The automatic milking machine according to claim 17, wherein
- said automatic milking machine comprises at least two milking robots.

## Patentansprüche

1. Verfahren zum automatischen Melken von Tieren mit einer Melkmaschine, welche dafür eingerichtet ist, automatisch die Melkbecher mit den Zitzen eines Melktieres zu verbinden und das Tier automatisch zu melken, wobei die Melkmaschine von einem Computer gesteuert wird und der Computer ferner dafür eingerichtet ist zu kontrollieren, ob ein Tier gemolken werden darf, wobei das Verfahren durch die folgenden Schritte **gekennzeichnet** ist:
- Anwenden eines Mahlzeitkriterium-Parameters für jedes Tier, das an die Melkmaschine angeschlossen werden soll,
- Aufzeichnen eines Parameters, der auf das Fress- oder Trinkverhalten des Tieres bezogen ist, und
- Zulassen oder Verweigern, dass ein Tier in der Melkmaschine gemolken werden darf, auf der Grundlage zumindest der Aufzeichnung und des Mahlzeitkriterium-Parameters.

2. Verfahren nach Anspruch 1, wobei
- der Schritt des Aufzeichnens durchgeführt wird, indem in jeder Futteroder Wasserstation, zu welcher die Melktiere Zugang haben, eine Erfassungsvorrichtung bereitgestellt wird und jeder Besuch des Melktiers an der Futter- oder Wasserstation aufgezeichnet wird, und
- der Parameter, der auf das Fress- oder Trinkverhalten bezogen ist, immer aufgezeichnet wird, wenn die Zeit zwischen zwei Besuchen länger ist als der Mahlzeitkriterium-Parameter.

3. Verfahren nach Anspruch 1, welches den folgenden Schritt umfasst:
- Ermöglichen, dass das Melktier zwischen zwei Melkvorgängen mindestens eine Vollmahlzeit zu sich nimmt.

4. Verfahren nach Anspruch 1, weiches den folgenden Schritt umfasst:
- Erhöhen der Anzahl der Vollmahlzeiten zwischen zwei Melkvorgängen, wenn sich das Melktier an einem späteren Zeitpunkt in der Laktationsphase befindet.

5. Verfahren nach Anspruch 1, welches den folgenden weiteren Schritt umfasst:
- Verweigern des Zugangs zum Futter für das Tier, bis das Tier die automatische Melkmaschine passiert hat, wenn das Tier davor eine vorgegebene Anzahl von Vollmahlzeiten zu sich genommen hat, ohne gemolken worden zu sein.

6. Verfahren nach Anspruch 1, wobei
- der Computer dafür eingerichtet ist, den Zugang zu den Futter- oder Wasserstationen zu steuern, indem er Tore steuert, über welche die Futter- oder Wasserstationen zugänglich sind, oder indem er die Verteilung des Futters oder Wassers in den Futter- oder Wasserstationen steuert.

7. Verfahren nach Anspruch 1, wobei
- das Mahlzeitkriterium für jedes einzelne Tier in einem getrennten Bereich bestimmt wird und zur Verwendung in dem Verfahren in den Computer eingespeist wird.

8. Verfahren nach Anspruch 1 oder 7, wobei der Mahlzeitkriterium-Parameter durch die folgenden Schritte bestimmt wird:
- Bereitstellen einer Tierkennungs-Erfassungsvorrichtung in jeder Futteroder Wasserstation und Aufzeichnen jedes Besuchs des Melktiers in jeder Futteroder Wasserstation, um Futterstellen-Besuchsintervalle zu einzurichten.

9. Verfahren nach Anspruch 8, wobei der Mahlzeitkriterium-Parameter durch die folgenden weiteren Schritte bestimmt wird:
- Anpassen mindestens zweier Dichtefunktionen an den natürlichen Logarithmus der Futterstellen-Besuchsintervalle und
- Definieren, dass das Mahlzeitkriterium größer ist als der Mittelwert für die Dichtefunktion, welche den niedrigsten Mittelwert aufweist, und niedriger ist als der Mittelwert für die Dichtefunktion, welche den höchsten Mittelwert aufweiset.

10. Verfahren nach Anspruch 9, wobei
- das Mahlzeitkriterium definiert ist als Mittelwert für die Dichtfunktion mit dem höchsten Mittelwert, reduziert um die Standardabweichung für die Dichtefunktion mit dem höchsten Mittelwert, multipliziert mit einem speziellen Faktor.

11. Verfahren nach Anspruch 9, wobei
- das Mahlzeitkriterium definiert ist als die Zeit, bei welcher sich die erste Dichtefunktion und die zweite Dichtefunktion schneiden.

12. Verfahren nach einem der Ansprüche 9 bis 11, wobei
- es sich bei den Dichtefunktionen um eine Gaußsche Dichtefunktion oder eine Weibull-Dichtefunktion handelt.

13. Verfahren nach Anspruch 1, wobei
- für Tiere, welche ihre zweite oder höhere Laktationsperiode haben, der Mahlzeitkriterium-Parameter auf den Wert eingestellt wird, der bei der vorigen Laktation verwendet wurde.

14. Verfahren nach Anspruch 1, wobei
- für jedes Tier regelmäßig während einer Laktation ein neuer Mahlzeitkriterium-Parameter bestimmt wird und
- wenn sich der neue Mahlzeitkriterium-Parameter von dem verwendeten Mahlzeitkriterium-Parameter um mehr als einen bestimmten Schwellenwert unterscheidet, der neue Mahlzeitkriterium-Parameter verwendet wird.

15. Verfahren nach Anspruch 1, wobei
- die Melkmaschine eine Futterstation umfasst und das Verfahren den folgenden weiteren Schritt umfasst:
- Verweigern des Futters für das Tier an allen Futterstationen außer an der Futterstation in der Melkmaschine, wenn das Tier zuvor eine vorgegebene Anzahl von Vollmahlzeiten zu sich genommen hat, ohne gemolken worden zu sein,

16. Verfahren nach Anspruch 1, wobei
- es sich bei dem Parameter, der auf das Fressverhalten bezogen ist, um den Beginn einer neuen Mahlzeit oder das Ende einer Vollmahlzeit handelt, wobei
- das Ende einer Vollmahlzeit definiert ist als der Zeitpunkt der letzten Aufzeichnung einer Futteraufnahme, wenn für eine Zeitperiode, die länger als der Mahlzeitkriterium-Parameter ist, keine Futteraufnahme mehr stattfindet, und
- der Beginn einer neuen Mahlzeit definiert ist als der Zeitpunkt des ersten Futteraufnahmeversuchs nach einer Zeitperiode ohne Futteraufnahme, die länger ist als der Mahlzeitkriterium-Parameter.

17. Automatische Melkmaschine zum automatischen Melken von Tieren, welche einen Computer umfasst, der dafür eingerichtet ist, das Anwenden von Melkbechern an den Zitzen eines Tieres zu steuern und das Tier automatisch zu melken, **dadurch gekennzeichnet, dass**
- die automatische Melkmaschine ein Fressverhalten-Aufzeichnungsmittel umfasst, welches dafür eingerichtet ist, das Fressverhalten des Melktiers aufzuzeichnen, und
- die automatische Melkmaschine dafür eingerichtet ist, dem Melktier auf der Grundlage des Fressverhaltens zu ermöglichen oder zu verweigern, gemolken zu werden.

18. Automatische Melkmaschine nach Anspruch 17, wobei
- die automatische Melkmaschine dafür eingerichtet ist, für das Melktier auf der Grundlage des Fressverhaltens den Zugang zum Futter zu steuern, um das Melktier zu der automatischen Melkmaschine zu locken, wenn das Tier gemolken werden soll.

19. Automatische Melkmaschine nach Anspruch 17, wobei
- die automatische Melkmaschine mindestens zwei Melkroboter umfasst.

## Revendications

1. Procédé de traite automatique d'animaux au moyen d'une machine à traire prévue pour relier automatiquement les gobelets trayeurs aux trayons d'un animal à traire et pour traire automatiquement ledit animal, dans lequel la machine à traire est commandée par un ordinateur et ledit ordinateur est en outre prévu pour contrôler si la traite d'un animal est autorisée,
ledit procédé étant **caractérisé par** les étapes consistant à :
- utiliser un paramètre de critère de prise de nourriture pour chaque animal appelé à passer dans ladite machine à traire,
- enregistrer un paramètre concernant le comportement de prise de nourriture ou de boisson dudit animal, et
- permettre ou interdire la traite d'un animal dans ladite machine à traire sur la base au moins dudit enregistrement et dudit paramètre de critère de prise de nourriture.

2. Procédé selon la revendication 1, dans lequel
- ladite étape d'enregistrement s'effectue en disposant un lecteur dans chaque mangeoire ou abreuvoir auquel ledit animal à traire a accès et en enregistrant chaque occurrence dudit animal à traire à chaque mangeoire ou abreuvoir, et
- enregistrer ledit paramètre concernant le comportement de prise de nourriture ou de boisson chaque fois que la durée entre deux occurrences est plus longue que ledit paramètre de critère de prise de nourriture.

3. Procédé selon la revendication 1, comprenant l'étape consistant à :
- permettre audit animal à traire de prendre au moins un repas complet entre chaque traite.

4. Procédé selon la revendication 1, comprenant l'étape consistant à :
- augmenter le nombre de repas complets entre chaque traite lorsque ledit animal à traire se trouve par la suite en phase de lactation.

5. Procédé selon la revendication 1, comprenant en plus l'étape consistant à:
- interdire audit animal l'accès à la nourriture jusqu'à ce que ledit animal passe dans ladite machine à traire automatique si ledit animal a pris auparavant un nombre prédéterminé de repas complets sans être trait.

6. Procédé selon la revendication 1, dans lequel
- ledit ordinateur est prévu pour commander l'accès auxdites mangeoires ou abreuvoirs en commandant des portillons qui donnent accès auxdites mangeoires ou abreuvoirs ou en commandant la distribution d'aliment ou d'eau dans lesdites mangeoires ou abreuvoirs.

7. Procédé selon la revendication 1, dans lequel
- ledit critère de prise de nourriture est déterminé pour chaque animal individuel dans une zone séparée et introduit dans l'ordinateur afin d'être utilisé dans ledit procédé.

8. Procédé selon la revendication 1 ou la revendication 7, dans lequel ledit paramètre de critère de prise de nourriture est déterminé par les étapes consistant à:
- prévoir un lecteur d'identification des animaux dans chaque mangeoire et/ou abreuvoir et enregistrer chaque occurrence dudit animal à traire à chaque mangeoire et/ou abreuvoir afin d'établir des intervalles de visites de nourrissage.

9. Procédé selon la revendication 8, dans lequel ledit paramètre de critère de prise de nourriture est déterminé par les étapes additionnelles consistant à :
- ajuster au moins deux fonctions de densité au logarithme naturel des intervalles entre les visites de nourrissage, et
- définir ledit critère de prise de nourriture à une valeur supérieure à la moyenne de la fonction de densité ayant la moyenne la plus basse et à une valeur inférieure à la moyenne de la fonction de densité ayant la moyenne la plus élevée.

10. Procédé selon la revendication 9, dans lequel
- ledit critère de prise de nourriture est défini comme la moyenne de la fonction de densité ayant la moyenne la plus élevée diminuée de l'écart type de la fonction de densité ayant la moyenne la plus élevée et multipliée par un coefficient spécifié.

11. Procédé selon la revendication 9, dans lequel
- ledit critère de prise de nourriture est défini comme le moment de l'intersection de la première fonction de densité et de la deuxième fonction de densité.

12. Procédé selon l'une quelconque des revendications 9 à 11, dans lequel
- ladite fonction de densité est une fonction de densité gaussienne ou une fonction de densité weibullienne.

13. Procédé selon la revendication 1, dans lequel
- pour des animaux qui se trouvent dans leur deuxième période de lactation ou plus, ledit paramètre de critère de prise de nourriture est fixé à la valeur utilisée dans la lactation précédente.

14. Procédé selon la revendication 1, dans lequel
- un nouveau paramètre de critère de prise de nourriture est régulièrement déterminé pour chaque animal pendant une lactation, et
- le nouveau paramètre de critère de prise de nourriture est utilisé si ledit nouveau paramètre de critère de prise de nourriture diffère dudit paramètre de critère de prise de nourriture utilise par plus d'un seuil déterminé.

15. Procédé selon la revendication 1, dans lequel
- ladite machine à traire comprend une mangeoire et le procédé comprend en plus l'étape consistant à :
- interdire audit animal à traire l'accès à l'aliment dans toutes les mangeoires à l'exception de la mangeoire de ladite machine à traire si ledit animal a fait auparavant un nombre prédéterminé de repas complets sans être trait.

16. Procédé selon la revendication 1, dans lequel
- ledit paramètre concernant le paramètre de prise de nourriture est le début d'un nouveau repas ou la fin d'un repas complet, où
- la fin d'un repas complet est définie comme l'heure du dernier enregistrement de prise de nourriture lorsqu'il n'y a plus aucune prise d'aliment pendant une durée plus longue que ledit paramètre de critère de prise de nourriture, et
- le début d'un nouveau repas est défini comme l'heure de la première tentative de prise de nourriture après une durée sans prise d'aliment qui est plus longue que ledit paramètre de critère de prise de nourriture.

17. Machine à traire automatique pour la traite automatique d'animaux, comprenant un ordinateur prévu pour commander la mise en place de gobelets trayeurs sur les trayons d'un animal et la traite automatique dudit animal, **caractérisée en ce que**
- ladite machine à traire automatique comprend des moyens d'enregistrement de paramètres de prise de nourriture prévus pour enregistrer le paramètre de prise de nourriture dudit animal à traire, et
- ladite machine à traire automatique est prévue pour autoriser ou interdire la traite dudit animal à traire sur la base dudit paramètre de prise de nourriture.

18. Machine à traire automatique selon la revendication 17, dans laquelle
- ladite machine à traire automatique est prévue pour commander l'accès à l'aliment sur la base dudit paramètre de prise de nourriture pour ledit animal à traire afin d'attirer ledit animal à traire dans ladite machine à traire automatique lorsque ledit animal doit être trait.

19. Machine à traire automatique selon la revendication 17, dans laquelle
- ladite machine à traire automatique comprend au moins deux robots de traite.
